(19) Europäisches Patentamt
European Patent Office
Office européen des brevets

(11) Veröffentlichungsnummer: **0 073 387**
**B1**

(12) # EUROPÄISCHE PATENTSCHRIFT

(45) Veröffentlichungstag der Patentschrift: **27.12.84**

(51) Int. Cl.³: **C 09 B 35/46** // D06P1/06, D06P3/32

(21) Anmeldenummer: **82107403.6**

(22) Anmeldetag: **14.08.82**

(54) **Wasserlösliche Polyazofarbstoffe, ihre Herstellung und ihre Verwendung.**

(30) Priorität: **28.08.81 DE 3134063**

(43) Veröffentlichungstag der Anmeldung: **09.03.83 Patentblatt 83/10**

(45) Bekanntmachung des Hinweises auf die Patenterteilung: **27.12.84 Patentblatt 84/52**

(84) Benannte Vertragsstaaten: **CH DE FR GB IT LI**

(56) Entgegenhaltungen:
**DE - A - 2 215 952**
**DE - B - 1 046 221**
**DE - C - 943 662**

(73) Patentinhaber: **CASSELLA Aktiengesellschaft, Hanauer Landstrasse 526, D-6000 Frankfurt am Main 61 (DE)**

(72) Erfinder: **Armbrecht, Norbert, Bahnstrasse 75, D-6231 Sulzbach (DE)**
Erfinder: **Bauer, Wolfgang, Masurenstrasse 6, D-6457 Maintal 3 (DE)**
Erfinder: **Ribka, Joachim, Rügener Strasse 4, D-6050 Offenbach-Bürgel (DE)**

(74) Vertreter: **Urbach, Hans-Georg, Dr., Hanauer Landstrasse 526, D-6000 Frankfurt am Main 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die vorliegende Erfindung betrifft wasserlösliche Polyazofarbstoffe, die in Form der freien Säure der Formel I

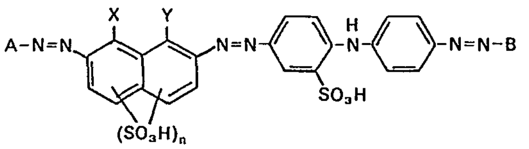

(I)

entsprechen, worin A den Rest einer Diazokomponente der Benzol-, Naphthalin- oder heterocyclischen Reihe, B den Rest einer Kupplungskomponente der Formel II

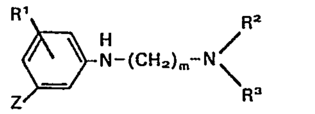

(II)

n die Ziffern 1 oder 2, m die Ziffern 1 bis 4, X eine Hydroxy- oder Aminogruppe, Y eine Hydroxy- oder Aminogruppe, wobei X ungleich Y ist, Z Hydroxy oder eine gegebenenfalls durch Alkyl oder Alkanoyl mit jeweils 1 bis 4 C-Atomen oder durch einen Rest der Formel

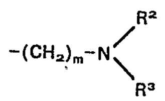

substituierte Aminogruppe, $R^1$ Wasserstoff, Alkyl mit 1 bis 4 C-Atomen, Alkoxy mit 1 bis 4 C-Atomen oder Alkoxyalkoxy mit 3 bis 7 C-Atomen, und $R^2$ und $R^3$ unabhängig voneinander Wasserstoff oder Alkyl mit 1 bis 4 C-Atomen bedeuten, deren Herstellung und deren Verwendung zum Färben von Leder.

Die Reste A leiten sich bevorzugt von Diazokomponenten der Benzolreihe ab, jedoch können auch Diazokomponenten der Naphthalinreihe oder heterocyclische Diazokomponenten, beispielsweise der Benzthiazolreihe eingesetzt werden. Die Reste A der Diazokomponenten der Benzolreihe können unsubstituiert oder durch folgende Substituenten ein- oder mehrfach substituiert sein: Halogen, insbesondere Chlor oder Brom, Alkyl mit 1 bis 4 C-Atomen, Alkoxy mit 1 bis 4 C-Atomen, Cyan, Nitro, Carboxy, Sulfo, Aminocarbonyl, Aminosulfonyl sowie einen Phenylazorest, dessen Phenylrest seinerseits gegebenenfalls durch folgende Substituenten ein- oder mehrfach substitiert sein kann: Halogen, insbesondere Chlor oder Brom, Alkyl mit 1 bis 4 C-Atomen, Alkoxy mit 1 bis 4 C-Atomen, Cyan, Carboxy, Sulfo, Aminocarbonyl und Aminosulfonyl.

Unter einer Mehrfachsubstitution sind im Sinne vorliegender Erfindung in der Regel die Zweifach- und die Dreifachsubstitution zu verstehen.

Ein für A stehender Rest einer Diazokomponente der Benzolreihe ist insbesondere ein Phenylkern, der entweder unsubstituiert ist oder der eine $-COOH$ oder $-SO_3H$-Gruppe, eine Phenylazogruppe oder eine Phenylaminogruppe trägt, gegebenenfalls in Kombination mit einer oder zwei Alkyl- oder Alkoxygruppen oder einer Cyan- oder Nitrogruppe oder einem Halogenatom, oder der höchstens zwei, vorzugsweise jedoch nur eine Cyan-, Nitro-, Aminocarbonyl- oder Aminosulfonylgruppen trägt, oder der bis zu drei, vorzugsweise ein oder zwei Substituenten aus der Gruppe Halogenatom, Alkyl oder Alkoxy trägt.

Besonders bevorzugte für A stehende Reste von Diazokomponenten der Benzolreihe sind solche, deren Phenylkern entweder unsubstituiert oder durch eine Sulfo- oder Carboxylgruppe oder eine Phenylazogruppe, gegebenenfalls in Kombination mit einer Methyl- oder Methoxygruppe oder einem Chloratom, eine Nitro-, Cyan-, Aminocarbonyl oder Aminosulfonylgruppe oder ein Chlor- oder Bromatom, eine oder zwei Methylgruppen, eine oder zwei Methoxygruppen oder eine Methyl- und zusätzlich eine Methoxygruppe substituiert ist.

Trägt der für A stehende substituierte Phenylkern eine Phenylazo- oder Phenylaminogruppe, so kann deren Phenylkern seinerseits in der gleichen Weise substituiert sein, wie oben für den A stehenden Phenylkern selbst angegeben, mit der Ausnahme, dass der Phenylkern der Phenylazo- oder Phenylaminogruppe nicht wiederum eine Phenylazo- oder Phenylaminogruppe tragen kann.

Vorzugsweise trägt jedoch ein für A stehender, durch Phenylazo substituierter Phenylkern keinen weiteren Substituenten und ist der Phenylkern der Phenylazo- oder Phenylaminogruppe seinerseits nur einfach durch eine Sulfo- oder Nitrogruppe oder zweifach durch die Kombination Sulfo- und Nitrogruppe substituiert.

Ein für A stehender Rest einer Diazokomponente der Naphthalinreihe ist insbesondere ein Naphthyl-(1) oder Naphthyl-(2)-kern, der entweder unsubstituiert ist, oder der eine oder zwei, vorzugsweise eine $-COOH$ oder $-SO_3H$-Gruppe trägt, wobei er neben einer einzelnen dieser Gruppen ggf. zusätzlich eine oder zwei, vorzugsweise eine Alkyl- oder Alkoxygruppe oder eine Cyan- oder Nitrogruppe oder ein Halogenatom trägt, oder der höchstens zwei, vorzugsweise jedoch nur eine Cyan-, Nitro-, Aminocarbonyl- oder Aminosulfonylgruppen trägt, oder der bis zu drei, vorzugsweise ein oder zwei Substituenten aus der Gruppe Halogenatom, Alkyl oder Alkoxy trägt.

Besonders bevorzugte für A stehende Reste von Diazokomponenten der Naphthalinreihe sind solche, deren Naphthylkern entweder unsubstituiert oder durch eine oder zwei Sulfo- oder Carboxylgruppen oder durch eine Sulfo- oder Carboxylgruppe, in Kombination mit einer Methyl- oder Methoxy- oder Nitrogruppe oder einem Chloratom, oder durch eine Nitro-, Cyan-, Methyl-, Methoxy-, Aminocarbonyl- oder Aminosulfonylgruppe oder ein Chlor- oder Bromatom substituiert ist.

Für A stehende Reste von Diazokomponenten der heterocyclischen Reihe sind insbesondere der 4-[Benzthiazol-(2)-yl]-phenylrest, der unsubstituiert oder durch eine Alkylgruppe mit 1 bis 4 C-Atomen, vorzugsweise eine Methylgruppe oder durch eine Sulfogruppe monosubstituiert oder durch eine Kombination einer solchen Alkylgruppe mit einer Sulfogruppe disubstituiert sein kann.

Die durch Z symbolisierte Aminogruppe kann durch Alkylgruppen mit 1 bis 4 C-Atomen, vorzugsweise durch Methyl mono- oder disubstituiert, oder durch eine Gruppe der Formel

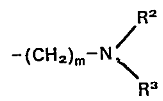

oder durch Alkanoyl, vorzugsweise Acetyl, monosubstituiert sein, oder sie kann eine Alkyl- neben einer Alkanoylgruppe der oben bezeichneten Kettenlängen tragen. Besonders bevorzugte Bedeutung für Z ist $-NH_2$.

Sehr wertvolle anwendungstechnische Eigenschaften und besondere herstellungstechnische Vorteile bieten auch Mischungen erfindungsgemässer Farbstoffe, in denen Z eine $NH_2$-Gruppe ist, mit bis zu 50 Gew.-%, vorzugsweise mit bis zu 20 Gew.-% erfindungsgemässer Farbstoffe, in denen Z eine Gruppe der Formel

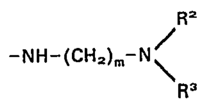

ist.

Insbesondere sind bevorzugt erfindungsgemässe Polyazofarbstoffe, die in Form ihrer freien Säuren der Formel III entsprechen

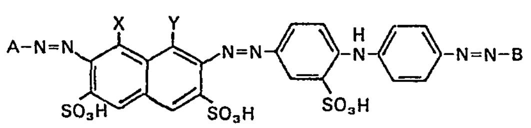 (III)

worin A den Rest einer Diazokomponente der Benzolreihe, X eine Hydroxy- oder Aminogruppe, Y eine Hydroxy- oder Aminogruppe, wobei X ungleich Y ist, bedeuten, und B die bereits genannte Bedeutung besitzt.

Bevorzugte Reste B leiten sich von Kupplungskomponenten der Formel II

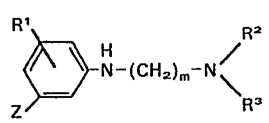 (II)

ab, worin Z eine Methylamino-, Ethylamino-, Formylamino- oder Acetylaminogruppe, eine Gruppe der Formel

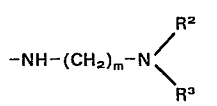

insbesondere aber eine =OH oder $-NH_2$-Gruppe, $R^1$ Wasserstoff, Alkyl mit 1 bis 4 C-Atomen, Methoxy, Ethoxy, oder Methoxyethoxy, insbesondere Wasserstoff oder Methyl, $R^2$ und $R^3$ unabhängig voneinander Wasserstoff, Methyl oder Ethyl, und m die Ziffern 2 oder 3 bedeuten.

Im Rahmen der vorliegenden Erfindung werden solche Polyazofarbstoffe der Formel I besonders bevorzugt, bei denen X=OH und $Y=NH_2$ ist.

Besonders bevorzugt sind auch solche erfindungsgemässen Farbstoffe, die in ihrem Molekül mehrere bevorzugte Merkmale aufweisen.

Die Herstellung der erfindungsgemässen Farbstoffe der Formel I erfolgt durch Kupplung des Diazoniumdisazofarbstoffs der Formel IV

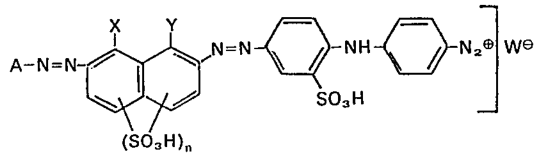 (IV)

worin A, X, Y und n die obengenannten Bedeutungen haben, und W das Anion einer Mineralsäure ist, in an sich bekannter Weise auf eine Verbindung der Formel II

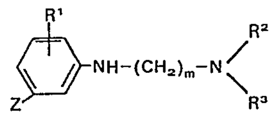 (II)

worin Z, $R^1$, $R^2$, $R^3$ und m die obengenannten Bedeutungen haben.

Üblicherweise werden Kupplungsreaktionen wie die obige in einem im wesentlichen wässerigen Medium vorgenommen. Neben den Reaktanten können dabei auch organische Lösungsmittel, die mit Wasser vollständig oder beschränkt mischbar sind, anwesend sein. So kann z.B. auch in zweiphasigen Systemen, wie dem System n-Butanol/Wasser, vorteilhaft gearbeitet werden. Ausserdem können Kupplungsbeschleuniger, wie z.B. Pyridin oder Dimethylformamid sowie pH-regulierende Substanzen zugesetzt werden. Der pH-Wert des Systems wird in der Regel auf Werte $<7$, vorzugsweise zwischen 3 und 6, eingestellt, und die Temperatur wird bei 0 bis 50, vorzugsweise 10 bis 30° C gehalten.

Auch die Diazoniumdisazofarbstoffe der Formel IV können in an sich bekannter Weise auf der Basis der an sich bekannten Diazotierungs- und Kupplungsreaktionen hergestellt werden.

Will man bevorzugte erfindungsgemässe Farbstoffe herstellen, in denen X eine Hydroxygruppe und Y eine $-NH_2$-Gruppe ist, so wird zur Herstellung der entsprechenden Ausgangsverbindung der Formel IV zunächst 4,4'-Diaminodiphenylamin-2'-sulfonsäure in an sich bekannter Weise tetrazotiert, z.B. durch Umsetzung mit Natriumnitrit in saurem wässerigem Medium und die erhaltene Tetrazoverbindung in schwach saurem Bereich auf eine Aminonaphtholsulfonsäure der Formel V

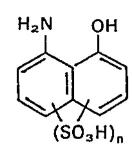 (V)

gekuppelt. Man erhält dann einen Diazoniummonoazofarbstoff der Formel VI

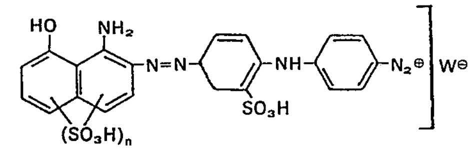 (VI)

der seinerseits im schwach alkalischen Bereich mit einer in bekannter Weise durch Diazotierung eines Amins der Formel $A-NH_2$ erhaltenen Diazo-

nium-verbindung der Formel $A-N_2^{\oplus}$ gekuppelt wird. Man erhält in dieser Weise das gewünschte Zwischenprodukt der Formel IV, worin X =$-OH$ und Y=$-NH_2$ ist.

Will man dagegen erfindungsgemässe Farbstoffe der Formel I herstellen, in denen X eine $-NH_2$-Gruppe und Y die Hydroxygruppe ist, so wird zur Herstellung der entsprechenden Ausgangsverbindung der Formel IV zunächst eine in bekannter Weise durch Diazotierung eines Amins der Formel $A-NH_2$ erhaltene Diazoniumverbindung der Formel $A-N_2^{\oplus}$ im schwach sauren Bereich auf eine Aminonaphtholsulfonsäure der Formel V

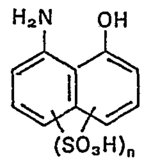

(V)

gekuppelt. Man erhält dann einen Monoazofarbstoff der Formel VII

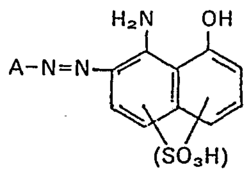

(VII)

auf den anschliessend im schwach alkalischen Bereich die aus 4,4'-Diaminodiphenylamin-2'-sulfonsäure durch Diazotierung in an sich bekannter Weise herstellbare Tetrazoniumverbindung gekuppelt wird.

Hierbei erhält man das Zwischenprodukt der Formel IV, in dem X=$-NH_2$ und Y=$-OH$ ist.

Die Kupplungskomponenten der allgemeinen Formel II werden in an sich bekannter Weise hergestellt, beispielsweise dadurch, dass man ein Anilinderivat der Formel

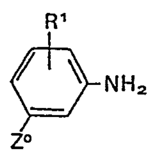

worin $Z^o$ Hydroxy oder eine gegebenenfalls durch Alkyl oder Alkanoyl mit jeweils 1 bis 4 C-Atomen substituierte Aminogruppe bedeutet, in Wasser oder einem inerten organischen, vorzugsweise mit Wasser mischbaren, Lösungsmittel im Molverhältnis 1 : 1 bis 1 : 3 mit einem Halogenaminoalkan der Formel

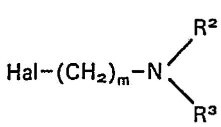

umsetzt,

worin Hal ein Halogenatom, vorzugsweise Chlor oder Brom ist. Die Umsetzung erfolgt normalerweise bei schwach sauren pH-Werten, etwa zwischen pH 4 und 6,5 und bei erhöhter Temperatur, beispielsweise von 80 bis 100° C.

(Vgl. Beilstein Bd. *12*, EII, S. 287; DRP 488945; Frdl. Bd. *16*, S. 2696 sowie Beilstein Bd. *13*, EII, S. 28; DRP 488890; Frdl. Bd. *16*, S. 2703 und Beilstein Bd. *13* EIII, S. 91; F. G. Mann, F. T. Naylor und J. W. G. Porter, „Jour. Chem. Soc.", London [1974], S. 914.)

Beispiele für geeignete Amine der Formel $A-NH_2$ sind: Anilin, 2-, 3- und 4-Chloranilin, 2-, 3- und 4-Methylanilin, 2-, 3- und 4-Methoxyanilin, 2-, 3- und 4-Ethoxyanilin, 2-Methoxy-5-methylanilin, 2-, 3- und 4-Nitroanilin, 2-Chlor-4-nitroanilin, 4-Aminobenzoesäure, 2-Aminobenzoesäure, 2-, 3- und 4-Aminobenzoesäure, 4-Aminobenzoesäureamid, 4-Aminobenzolsulfonsäureamid, 4-Nitro-4'-aminodiphenylamin-2-sulfonsäure, 2,5-Dichloranilin, 1-Aminonaphthalin, 1-Aminonaphthalin-4-sulfonsäure, 2-Aminonaphthalin-6-sulfonsäure, 2-Aminonaphthalin-1-sulfonsäure, Dehydrothiotoluidin, Dehydrothiotoluidinsulfonsäure, 4-Aminoazobenzol, 4-Aminoazobenzol-4'-sulfonsäure.

Beispiele für geeignete Aminonaphtholsulfonsäuren der Formel V sind:

1-Amino-8-hydroxynaphthalin-4-sulfonsäure, 1-Amino-8-hydroxynaphthalin-3,6-disulfonsäure, 1-Amino-8-hydroxynaphthalin-4,6-disulfonsäure.

Die erfindungsgemässen Farbstoffe eignen sich hervorragend zum Färben verschiedener Lederarten (beispielsweise Rindbox, Boxcalf, Spaltvelour) und insbesondere zum Färben von vegetabil-synthetisch nachgegerbten Lederarten.

Die Polyazofarbstoffe der allgemeinen Formel I können ferner zum Färben von Baumwolle, Polyamid, Papier und Holz eingesetzt werden. Das Färben erfolgt nach bekannten Methoden. Man erhält mit den erfindungsgemässen Farbstoffen sehr egale Färbungen hoher Farbstärke mit ausgezeichneter Lichtechtheit, Lösungsmittelechtheit, Nassechtheit sowie sehr guter Licker- und Schweissechtheit sowie sehr guter Beständigkeit gegen Wasserhärte, Formaldehyd, Ameisensäure und Alkali.

Gegenüber nächstvergleichbaren Farbstoffen, beispielsweise den in den Patentschriften DT-PS Nrn. 943662 und 1046221, DOS Nr. 2254835 und DAS Nr. 2215952 beschriebenen Farbstoffen weisen die erfindungsgemässen Farbstoffe überraschende Vorteile auf, beispielsweise in der Farbstärke und in den Nassechtheiten auf Leder.

Ferner ziehen die erfindungsgemässen Farbstoffe weitgehend auf das Leder auf, so dass ökologisch günstigere Färbereiabwässer erhalten werden.

In den folgenden Beispielen bedeuten Prozente Gew.-%. Die Temperaturen sind in Celsiusgraden angegeben.

*Beispiel 1*

27,9 g 4,4'-Diaminodiphenylamin-2-sulfonsäure werden in einem Gemisch aus 200 g Wasser und 50 g 30%iger Salzsäure unter Zugabe von Eis bei 0 bis 5° mit einer Lösung von 13,8 g Natriumnitrit in 50 g Wasser tetrazotiert. Nach Zugabe der Natriumnitritlösung rührt man ca. 1½ h bei 0 bis 5° nach und beseitigt dann überschüssige salpetrige Säure mit Amidosulfonsäure. Dann werden 30 g 1-Amino-8-hydroxynaphthalin-3,6-disulfonsäure in 100 g Wasser und 30%iger Natronlauge so gelöst, dass die Lösung einen pH-Wert von 6,5 bis 6,7 aufweist. Die neutrale Lösung der 1-Amino-8-hydroxynaphthalin-3,6-disulfonsäure wird darauf langsam zu der mit Natriumacetat auf pH 2 abgestumpften Lösung der Tetrazokomponente getropft und die halbseitige Kupplung durch Rühren bei 10 bis 15° und Zugabe von Natriumacetat bis zu einem pH-Wert von 2,5 vervollständigt.

Der mit Eis auf 0 bis 5° gekühlten Suspension des diazotierten Monoazofarbstoffs wird anschliessend eine in bekannter Weise aus 8,54 g Anilin, 25 g 30%iger Salzsäure und einer Lösung von 6,3 g Natriumnitrit in 30 g Wasser bei 0° hergestellte Diazobenzollösung zugesetzt und mit 10%iger Natriumcarbonatlösung ein pH-Wert von 8,5 bis 9 eingestellt.

Zu der erhaltenen Suspension des blauen diazotierten Disazofarbstoffs wird eine durch Kondensation von 10,8 g 1,3-Diaminobenzol mit 17,2 g Diethylaminoethylchloridhydrochlorid in 100 g Wasser bei pH 5 bis 6 und 95 bis 100° hergestellte Lösung von 1-Amino-3-(2'-diethylaminoethylamino)benzol gegeben. Die Kupplung ist nach ca. dreistündigem Rühren bei 15 bis 20° beendet. Die Abscheidung des Farbstoffs erfolgt durch Einstellen eines pH-Wertes von 2 und Zugabe von 100 g Natriumchlorid.

Der Farbstoff, dem in Form der freien Säure die Formel

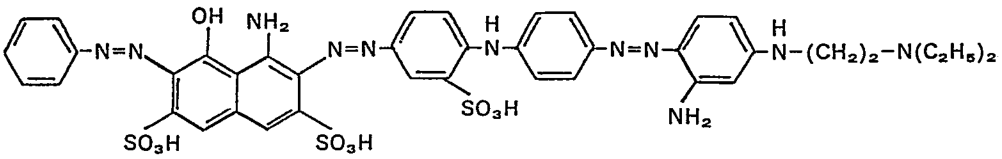

zukommt, wird filtriert und getrocknet.

Ausbeute: 152 g schwarzes Pulver.

*Färbebeispiel 1*

In einem Färbefass werden 100 g vegetabil-synthetisch nachgegerbtes Rindleder (Crust) in einer Färbeflotte aus 3,75 g des nach Beispiel 1 erhaltenen Farbstoffs, 1000 g Wasser und 1,5 g eines anionischen Fettlickers 45 min bei 50° gewalkt. Anschliessend fixiert man den Farbstoff mit 3,7 g 85%iger Ameisensäure. Das gefärbte Leder wird dann gespült und abgewalkt. Nach dem Trocknen bei 60° erhält man eine schwarze Färbung hoher Farbstärke mit sehr guten Echtheitseigenschaften, beispielsweise Licht- und Nassechtheit.

*Beispiel 2*

27,9 g 4,4'-Diaminodiphenylamin-2-sulfonsäure werden nach den Angaben des Beispiels 1 tetrazotiert und mit 30 g 1-Amino-8-hydroxynaphthalin-3,6-disulfonsäure zum diazotierten Monoazofarbstoff gekuppelt; anschliessend erfolgt die Kupplung mit der aus 8,54 g Anilin hergestellten Diazobenzollösung.

Die Suspension des blauen diazotierten Disazofarbstoffs wird darauf mit einer durch Kondensation von 20,7 g 1-Amino-3-(2'-diethylaminoethylchloridhydrochlorid bei pH 5 bis 6 und 95 bis 100° erhaltenen Lösung von 1,3-Bis-(2'-diethylaminoethylamino)benzol vereinigt. Der Farbstoff wird bei pH 2 unter Zugabe von 130 g Natriumchlorid isoliert und getrocknet.

Ausbeute: 170 g schwarzes Pulver.

Auf vegetabil-synthetisch nachgegerbten Lederarten erhält man eine schwarze Färbung hoher Farbstärke mit guten Echtheitseigenschaften, beispielsweise gute Nassechtheit.

Der Tabelle I ist der strukturelle Aufbau weiterer, entsprechend den Farbstoffen nach den Beispielen 1 und 2 hergestellter Farbstoffe zu entnehmen, wobei angegeben ist:

in Spalte 1: die benutzte Diazokomponente $A-NH_2$,

in Spalte 2: die benutzte 1-Amino-8-hydroxynaphthalinsulfonsäure der Formel

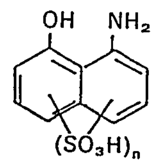

wobei in der Tabelle Zahl und Stellung der Sulfonsäuregruppen angegeben sind,

in Spalte 3: die benutzte Kupplungskomponente der allgemeinen Formel II, und

in Spalte 4: der Farbton des Farbstoffs auf Leder.

*(Tabelle auf der nächsten Seite)*

*Beispiel 3*

Zu einer nach bekannter Methode aus 14,8 g 1-Amino-4-nitrobenzol, 30 g 30%iger wässeriger Salzsäure und einer Lösung von 7,6 g Natriumnitrit in 30 g Wasser bei 0° hergestellten 4-Nitrodiazobenzollösung gibt man bei 0° eine mit Natriumcarbonat auf pH 6 eingestellte Lösung von 31,9 g 1-Amino-8-hydroxynaphthalin-3,6-disulfonsäure in 100 Teilen Wasser.

Nach beendeter Kupplung wird zu der Suspension des entstandenen roten Monoazofarbstoffs die durch Tetrazotierung von 27,9 g 4,4'-Diaminodiphenylamino-2-sulfonsäure mit 13,8 g Natriumnitrit in einem Gemisch von 50 Teilen 30%iger wässeriger Salzsäure, 200 g Wasser unter Zugabe von Eis bei 0 bis 5° dargestellte Lösung der Tetraazoverbindung gegeben.

Anschliessend stellt man im Verlauf von ½ Stunde mit einer auf 5° gekühlten 10%igen Natriumcarbonatlösung einen pH-Wert von 7,5 ein.

Die halbseitige Kupplung ist danach in wenigen Minuten beendet, worauf man die Mischung mit einer aus 10,9 g 3-Aminophenol und 17,2 g Di-

*Tabelle I*

| Diazokomponente $A-NH_2$ | 1-Amino-8-hydroxynaphthalinsulfonsäure | Kupplungskomponente der Formel II | Farbton auf Leder |
|---|---|---|---|
| Anilin | 3,6-Disulfonsäure | 1-Hydroxy-3-(3'-dimethylaminopropylamino)benzol | schwarz |
| Anilin | 3,6-Disulfonsäure | 1-Amino-3-(2'-dimethylaminoethylamino)benzol | schwarz |
| Anilin | 3,6-Disulfonsäure | 1-Hydroxy-3-(2'-dimethylaminoethylamino)benzol | schwarz |
| Anilin | 3,6-Disulfonsäure | 1-Amino-3-(2'-diethylaminoethylamino)-6-methylbenzol | schwarz |
| Anilin | 3,6-Disulfonsäure | 1-Hydroxy-3-(2'-aminoethylamino)benzol | schwarz |
| 4-Methoxyanilin | 3,6-Disulfonsäure | 1-Amino-3-(2'-diethylaminoethylamino)benzol | schwarz |
| 2-Methylanilin | 3,6-Disulfonsäure | 1-Amino-3-(2'-diethylaminoethylamino)benzol | schwarz |
| 2,5-Dimethylanilin | 3,6-Disulfonsäure | 1-Amino-3-(2'-diethylaminoethylamino)benzol | schwarz |
| 4-Aminobenzolsulfonsäure | 4-Sulfonsäure | 1-Amino-3-(2'-diethylaminoethylamino)benzol | schwarz |
| 4-Aminobenzoesäure | 3,6-Disulfonsäure | 1-Amino-3-(2'-diethylaminoethylamino)benzol | schwarz |
| 4-Chloranilin | 3,6-Disulfonsäure | 1-Amino-3-(2'-diethylaminoethylamino)benzol | schwarz |
| 1-Aminonaphthalin-4-sulfonsäure | 3,6-Disulfonsäure | 1-Amino-3-(2'-diethylaminoethylamino)benzol | schwarz |
| Dehydrothiotoluidinmonosulfonsäure | 3,6-Disulfonsäure | 1-Amino-3-(2'-diethylaminoethylamino)benzol | schwarz |
| 4-Aminoazobenzol-4'-sulfonsäure | 3,6-Disulfonsäure | 1-Amino-3-(2'-diethylaminoethylamino)benzol | schwarz |
| Anilin | 4,6-Disulfonsäure | 1-Amino-3-(2'-diethylaminoethylamino)benzol | schwarz |
| Anilin | 3,6-Disulfonsäure | 1-Amino-3-(2'-diethylaminoethylamino)benzol + 1,3-Bis-(2'-diethylaminoethylamino)benzol (Molverhältnis 4:1) | schwarz |
| Anilin | 3,6-Disulfonsäure | 1-Amino-3-(2'-aminoethylamino)benzol | schwarz |
| Anilin | 3,6-Disulfonsäure | Kondensationsprodukt aus 2,4-Diaminoanisol und Diethylaminethylchlorid (Molverhältnis 1:1) | schwarz |
| Anilin | 3,6-Disulfonsäure | Kondensationsprodukt aus 2,4-Diamino-(2'-methoxyethoxy)benzol und Dimethylaminoethylchlorid (Molverhältnis 1:1) | schwarz |

ethylaminoethylchloridhydrochlorid in 100 g Wasser bei pH 5 bis 6 und 95 bis 100° hergestellten Lösung von 1-Hydroxy-3-(2'-diethylaminoethylamino)benzol versetzt. Man lässt ca. 3 h nachrühren.

Der Schwarzfarbstoff der Formel

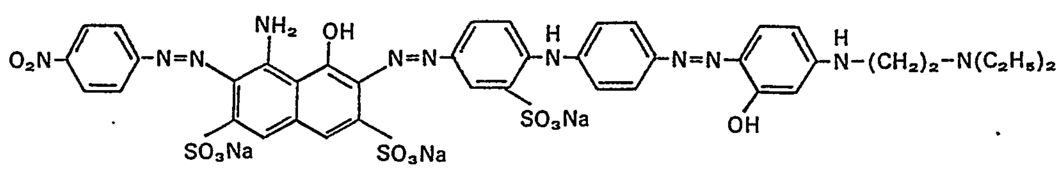

wird nach Einstellen eines pH-Wertes von 2 und Zugabe von 100 g Natriumchlorid isoliert und getrocknet.

Ausbeute: 165 g schwarzes Pulver.

In Tabelle II sind weitere schwarze Farbstoffe aufgeführt, die entsprechend dem in Beispiel 2 beschriebenen Herstellungsverfahren aufgebaut werden können und sich hervorragend zum Färben von Leder eignen.

*Tabelle II*

| Diazokomponente $A-NH_2$ | 1-Amino-8-hydroxynaphthalinsulfonsäure | Kupplungskomponente der Formel II | Farbton auf Leder |
|---|---|---|---|
| 2-Nitroanilin | 3,6-Disulfonsäure | 1-Amino-3-(2'-diethylaminoethylamino)benzol | schwarz |
| 2,5-Dichloranilin | 3,6-Disulfonsäure | 1-Amino-3-(2'-diethylaminoethylamino)benzol | schwarz |
| 2-Chloranilin | 3,6-Disulfonsäure | 1-Amino-3-(2'-diethylaminoethylamino)benzol | schwarz |
| 4-Chloranilin | 3,6-Disulfonsäure | 1-Amino-3-(2'-diethylaminoethylamino)benzol | schwarz |

## Patentansprüche

1. Wasserlösliche Polyazofarbstoffe, die in Form der freien Säure der Formel (I)

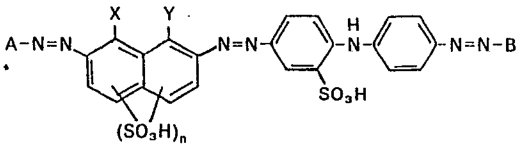 (I)

entsprechen, worin A den Rest einer Diazokomponente der Benzol-, Naphthalin- oder heterocyclischen Reihe, B den Rest einer Kupplungskomponente der Formel (II)

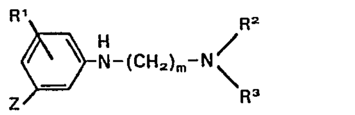 (II)

n die Ziffern 1 oder 2, m die Ziffern 1 bis 4, X eine Hydroxy- oder Aminogruppe, Y eine Hydroxy- oder Aminogruppe, wobei X ungleich Y ist, Z Hydroxy oder eine gegebenenfalls durch Alkyl oder Alkanoyl mit jeweils 1 bis 4 C-Atomen oder durch einen Rest der Formel

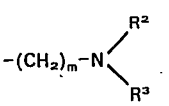

substituierte Aminogruppe, $R^1$ Wasserstoff, Alkyl mit 1 bis 4 C-Atomen, Alkoxy mit 1 bis 4 C-Atomen oder Alkoxyalkoxy mit 3 bis 7 C-Atomen, und $R^2$ und $R^3$ unabhängig voneinander Wasserstoff oder Alkyl mit 1 bis 4 C-Atomen bedeuten.

2. Wasserlösliche Polyazofarbstoffe gemäss Anspruch 1, dadurch gekennzeichnet, dass sie in Form ihrer freien Säuren der Formel (III) entsprechen

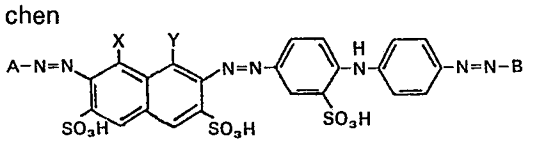 (III)

worin A den Rest einer Diazokomponente der Benzolreihe, X eine Hydroxy- oder Aminogruppe, Y eine Hydroxy- oder Aminogruppe, wobei X ungleich Y ist, bedeuten, und B die bereits genannte Bedeutung besitzt.

3. Wasserlösliche Polyazofarbstoffe gemäss den Ansprüchen 1 und 2, dadurch gekennzeichnet, dass A der Rest einer Diazokomponente der Benzolreihe ist, der unsubstituiert oder durch folgende Substituenten ein- oder mehrfach substituiert ist: Halogen, insbesondere Chlor oder Brom, Alkyl mit 1 bis 4 C-Atomen, Alkoxy mit 1 bis 4 C-Atomen, Cyan, Nitro, Carboxy, Sulfo, Aminocarbonyl, Aminosulfonyl sowie einen Phenylazorest, dessen Phenylrest seinerseits gegebenenfalls durch folgende Substituenten ein- oder mehrfach substituiert sein kann: Halogen, insbesondere Chlor oder Brom, Alkyl mit 1 bis 4 C-Atomen, Alkoxy mit 1 bis 4 C-Atomen, Cyan, Carboxy, Sulfo, Aminocabonyl und Aminosulfonyl.

4. Wasserlösliche Polyazofarbstoffe gemäss den Ansprüchen 1 und 2, dadurch gekennzeichnet, dass A der Rest einer Diazokomponente der Naphthalinreihe ist, insbesondere ein Naphthyl-(1) oder Naphthyl-(2)-kern, der entweder unsubstituiert ist, oder der eine oder zwei, vorzugsweise eine $-COOH$ oder $-SO_3H$-Gruppe trägt, wobei er neben einer einzelnen dieser Gruppen ggf. zusätzlich eine oder zwei, vorzugsweise eine Alkyl- oder Alkoxygruppe oder eine Cyan- oder Nitrogruppe oder ein Halogenatom trägt, oder der höchstens zwei, vorzugsweise jedoch nur eine Cyan-, Nitro-, Aminocarbonyl- oder Aminosulfonylgruppen trägt, oder der bis zu drei, vorzugsweise ein oder zwei Substituenten aus der Gruppe Halogenatom, Alkyl oder Alkoxy trägt.

5. Wasserlösliche Polyazofarbstoffe gemäss den Ansprüchen 1 und 2, dadurch gekennzeichnet, dass A ein 4-[Benzthiazol-(2)-yl]phenylrest ist, der unsubstituiert oder durch eine Alkylgruppe mit 1 bis 4 C-Atomen, vorzugsweise eine Methylgruppe oder durch eine Sulfogruppe monosubstituiert oder durch eine Kombination einer solchen Alkylgruppe mit einer Sulfogruppe disubstituiert sein kann.

6. Wasserlösliche Polyazofarbstoffe gemäss den Ansprüchen 1 und 2, dadurch gekennzeichnet, dass B sich von einer Kupplungskomponente der Formel (II)

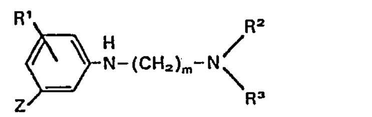 (II)

ableitet, worin Z eine Methylamino-, Ethylamino-, Formylamino- oder Acetylaminogruppe, eine Gruppe der Formel

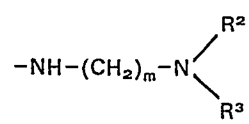

oder eine $-OH$ oder $-NH_2$-Gruppe, $R^1$ Wasserstoff, Alkyl mit 1 bis 4 C-Atomen, Methoxy, Ethoxy, oder Methoxyethoxy, $R^2$ und $R^3$ unabhängig voneinander Wasserstoff, Methyl oder Ethyl, und m die Ziffern 2 oder 3 bedeuten.

7. Mischungen von wasserslöslichen Polyazofarbstoffen der Formel I des Anspruchs 1, in denen Z eine $NH_2$-Gruppe ist mit bis zu 50 Gew.-% eines wasserlöslichen Polyazofarbstoffs der Formel I des Anspruchs 1, in denen Z eine Gruppe der Formel

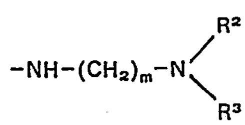

ist.

8. Verfahren zur Herstellung von wasserlöslichen Polyazofarbstoffen der Formel I des Anspruchs 1, dadurch gekennzeichnet, dass man den Diazoniumdisazofarbstoff der Formel (IV)

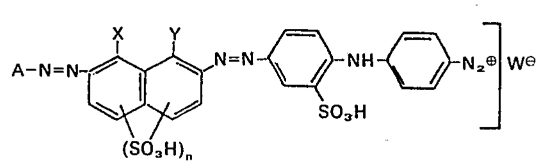 (IV)

worin A, X, Y und n die im Anspruch 1 genannten Bedeutungen haben und $W^{\ominus}$ das Anion einer Mineralsäure ist in an sich bekannter Weise auf eine Verbindung der Formel (II)

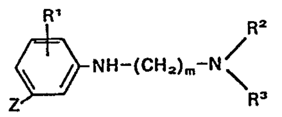

(II)

worin Z, $R^1$, $R^2$, $R^3$ und m die im Anspruch 1 genannten Bedeutungen haben, kuppelt.

9. Verfahren gemäss Anspruch 8, dadurch gekennzeichnet, dass man einen Diazoniummonoazofarbstoff der Formel (VI)

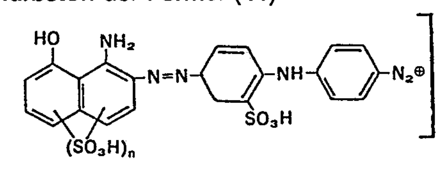

$W^{\ominus}$ (VI)

im schwach alkalischen Bereich mit einer in bekannter Weise durch Diazotierung eines Amins der Formel $A-NH_2$ erhaltenen Diazoniumverbindung der Formel $A-N_2^{\oplus}$ kuppelt, wobei A die im Anspruch 1 angegebene Bedeutung hat, und den erhaltenen Diazoniumdisazofarbstoff

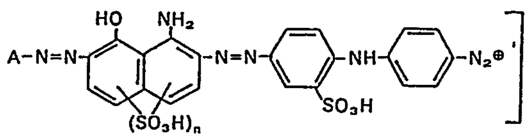

$W^{\ominus}$

worin A und $W^{\oplus}$ die im Anspruch 8 genannten Bedeutungen haben, mit einer Kupplungskomponente der Formel (II)

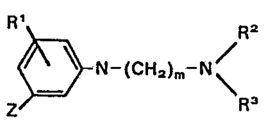

(II)

kuppelt.

10. Verwendung der wasserlöslichen Polyazofarbstoffe des Anspruchs 1 zum Färben von Leder.

## Revendications

1. Colorants polyazoïques solubles dans l'eau qui, sous la forme des acides libres, répondent à la formule (I)

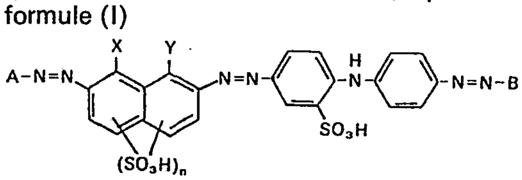

(I)

dans laquelle A désigne le reste d'une composante diazoïque de la série du benzène ou du naphtalène ou de la série hétérocyclique, B le reste d'une composante de copulation de formule (II)

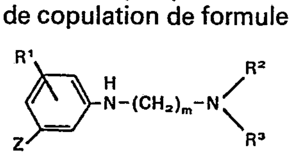

(II)

n est le nombre 1 ou 2 et m un nombre de 1 à 4, X représente un groupe hydroxy ou amino, Y également un groupe hydroxy ou amino, mais X et Y sont différents l'un de l'autre, Z est un groupe hydroxy ou bien un groupe amino éventuellement substitué par un alkyle ou un alcanoyle en $C_1$ à $C_4$ chacun ou par un radical

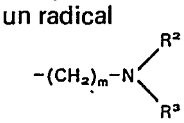

$R^1$ désigne l'hydrogène, un alkyle en $C_1$ à $C_4$ ou un alcoxy en $C_1$ à $C_4$ ou encore un alcoxyalcoxy en $C_3$ à $C_7$, et $R^2$ et $R^3$ désignent, indépendamment l'un de l'autre, l'hydrogène ou un alkyle en $C_1$ à $C_4$.

2. Colorants polyazoïques hydrosolubles selon la revendication 1, caractérisés en ce que, sous la forme de leurs acides libres, ils répondent à la formule (III)

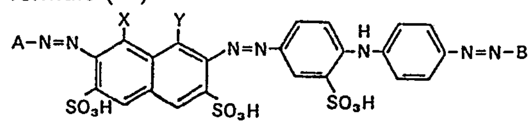

(III)

A désignant le reste d'une composante de diazotation de la série du benzène, X un groupe hydroxy ou amino, Y un groupe hydroxy ou amino, mais X et Y étant différents l'un de l'autre, et B a la signification donnée à la revendication 1.

3. Colorants polyazoïques hydrosolubles selon les revendications 1 et 2, caractérisés en ce que A est le reste d'une composante de diazotation de la série du benzène, sans substituants ou portant un ou plusieurs des substituants suivants: halogènes, en particulier chlore ou brome, alkyles en $C_1$ à $C_4$, groupes cyano, nitro, carboxy, sulfo, aminocarbonyle, aminosulfonyle, et phénylazo dont le phényle peut lui-même avoir éventuellement un ou plusieurs des substituants suivants: halogènes, en particulier chlore et brome, alkyles en $C_1$ à $C_4$, alcoxy en $C_1$ à $C_4$ et groupes cyano, carboxy, sulfo, aminocarbonyle et aminosulfonyle.

4. Colorants polyazoïques hydrosolubles selon les revendications 1 et 2, caractérisés en ce que A est le reste d'une composante de diazotation de la série du naphtalène, en particulier un cycle naphtyle-(1) ou naphtyle-(2), sans substituants ou bien portant un ou deux, mais de préférence un seul, groupe $-CO_2H$ ou $-SO_3H$, avec le cas échéant, en plus d'un seul de ces groupes, un ou deux, de préférence un seul, groupe alkyle ou alcoxy, ou bien un groupe cyano ou nitro ou un atome d'halogène, ou bien portant au maximum deux, mais de préférence un seul, groupes cyano, nitro, aminocarbonyle ou aminosulfonyle, ou encore jusqu'à trois substituants, mais de préférence un ou deux seulement, choisis parmi les atomes d'halogènes et les groupes alkyles et alcoxy.

5. Colorants polyazoïques hydrosolubles selon les revendications 1 et 2, caractérisés en ce que A est un radical 4-[benzothiazole-(2)yl]phénylique, sans substituants ou monosubstitué par un alkyle en $C_1$ à $C_4$, de préférence le groupe méthyle, ou par un groupe sulfo, ou encore pouvant être disubstitué par un tel alkyle et un groupe sulfo à la fois.

6. Colorants polyazoïques hydrosolubles selon les revendications 1 et 2, caractérisés en ce que B provient d'une composante de copulation de formule (II)

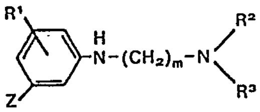 (II)

Z désignant un groupe méthylamino, éthylamino, formylamino ou acétylamino, un groupe

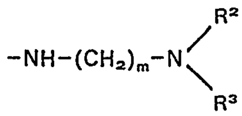

ou encore un groupe $-OH$ ou $-NH_2$, $R^1$ étant l'hydrogène, un alkyle en $C_1$ à $C_4$ ou un groupe métoxy, éthoxy ou méthoxyéthoxy, $R^2$ et $R^3$ désignent chacun, indépendamment l'un de l'autre, l'hydrogène ou un groupe méthyle ou éthyle, et m est le nombre 2 ou 3.

7. Mélanges de colorants polyazoïques solubles dans l'eau de formule (I) selon la revendication 1, dans lesquels Z est un groupe $-NH_2$, avec jusqu'à 50% en poids d'un colorant polyazoïque hydrosoluble également de formule (I), selon la revendication 1, dans lequel Z est un groupe de formule

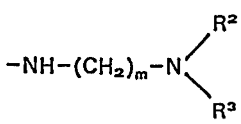

8. Procédé de préparation de colorants polyazoïques hydrosolubles de formule (I) selon la revendication 1, procédé caractérisé en ce que l'on copule de manière en elle-même connue le sel de diazonium d'un colorant disazoïque de formule (IV)

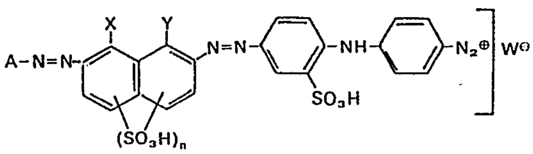 (IV)

A, X, Y et n ayant les significations données à la revendication 1 et $W^{\ominus}$ représentant l'anion d'un acide minéral, avec un composé de formule (II)

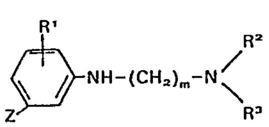 (II)

Z, $R^1$, $R^2$, $R^3$ et m ayant les significations données à la revendication 1.

9. Procédé selon la revendication 8, caractérisé en ce que l'on copule un sel de diazonium d'un colorant monoazoïque de formule (VI)

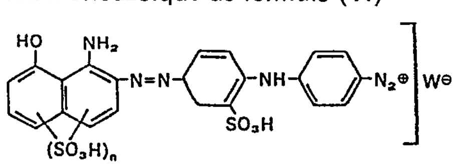 (VI)

en milieu faiblement alcalin avec un composé de diazonium $A-N_2^{\oplus}$ lui-même obtenu de manière connue par diazotation d'une amine $A-NH_2$ (A ayant la signification donnée à la revendication 1), puis on copule le sel de diazonium du colorant disazoïque ainsi obtenu

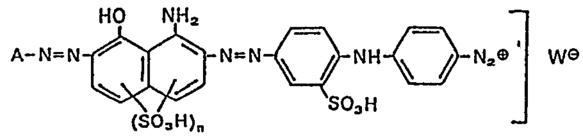

A et $W^{\ominus}$ ayant les significations données à la revendication 8, avec une composante de copulation de formule (II)

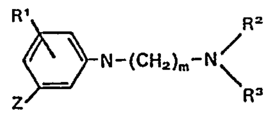 (II)

10. L'utlisation des colorants polyazoïques hydrosolubles selon la revendication 1 pour la teinture du cuir.

## Claims

1. Water-soluble polyazo dyestuffs which, in the form of the free acid, correspond to the formula (I)

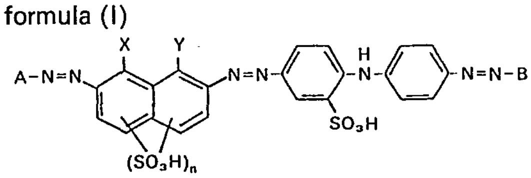 (I)

wherein A denotes the radical of a diazo component of the benzene, naphthalene or heterocyclic series, B denotes the radical of a coupling component of the formula (II)

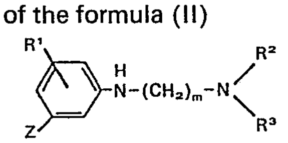 (II)

n denotes the number 1 or 2, m denotes a number from 1 to 4, X denotes a hydroxyl or amino group and Y denotes a hydroxyl or amino group but X differs from Y, Z denotes hydroxyl or an amino group which is optionally subtituted by alkyl or alkynoyl with in each case 1 to 4 C atoms or by a radical of the formula

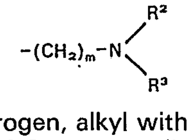

$R^1$ denotes hydrogen, alkyl with 1 to 4 C atoms, alkoxy with 1 to 4 C atoms or alkoxyalkoxy with 3 to 7 atoms and $R^2$ and $R^3$ independently of one another denote hydrogen or alkyl with 1 to 4 C atoms.

2. Water-soluble polyazo dyestuffs as claimed in Claim 1, characterised in that, in the form of their free acids, they correspond to the formula (III)

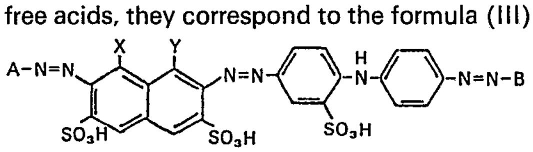 (III)

wherein A denotes the radical of a diazo component of the benzene series, Y denotes a hydroxyl or amino group and Y denotes a hydroxyl or amino group, but X differs from Y, and B has the meaning already given.

3. Water-soluble polyazo dyestuffs according to Claims 1 and 2, characterised in that A is the radical of a diazo component of the benzene series which is unsubstituted or monosubstituted or polysubstituted by the following substituents: halogen, in particular chlorine or bromine, alkyl with 1 to 4 C atoms, alkoxy with 1 to 4 C atoms, cyano, nitro-carboxyl, sulpho, aminocarbonyl, aminosulphonyl and a phenylazo radical in which the phenyl radical can in turn be optionally monosubstituted or polysubstituted by the following substituents: halogen, in particular chlorine or bromine, alkyl with 1 to 4 C atoms, alkoxy with 1 to 4 C atoms, cyano, carboxyl, sulpho, aminocarbonyl and aminosulphonyl.

4. Water-soluble polyazo dyestuffs according to Claims 1 and 2, characterised in that A is the radical of a diazo component of the naphthalene series, in particular a naphth-1-yl or naphth-2-yl nucleus which either is unsubstituted or carries one or two, preferably one, $-COOH$ or $-SO_3H$ group, the nucleus optionally additionally carrying, in addition to a single one of these groups, one or two, preferably one, alkyl or alkoxy group or a cyano or nitro group or a halogen atom, or carries at most two, but preferably only one, cyano, nitro, aminocarbonyl or aminosulphonyl group, or carries up to three, preferably one or two, substituents from the group comprising halogen atoms, alkyl and alkoxy.

5. Water-soluble polyazo dyestuffs according to Claims 1 and 2, characterised in that A is a 4-(benzothiazol-2-yl)phenyl radical which can be unsubstituted, monosubstituted by an alkyl group with 1 to 4 C atoms, preferably a methyl group, or by a sulpho group or disubstituted by a combination of such an alkyl group and a sulpho group.

6. Water-soluble polyazo dyestuffs according to Claims 1 and 2, characterised in that B is derived from a coupling component of the formula (II)

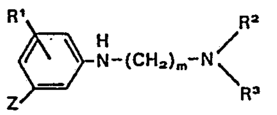 (II)

wherein Z denotes a methylamino, ethylamino, formylamino or acetylamino group, a group of the formula

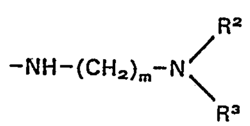

or an $-OH$ or $-NH_2$ group, $R^1$ denotes hydrogen, alkyl with 1 to 4 C atoms, methoxy, ethoxy or methoxyethoxy, $R^2$ and $R^3$ independently of one another denote hydrogen, methyl or ethyl and m denotes the number 2 or 3.

7. Mixtures of water-soluble polyazo dyestuffs of the formula (I) in Claim 1 in which Z is an $-NH_2$ group with up to 50% by weight of a water-soluble polyazo dyestuff of the formula (I) in Claim 1 in which Z is a group of the formula

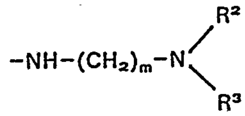

8. Process for the preparation of water-soluble polyazo dyestuffs of the formula I in Claim 1, characterised in that a diazonium-disazo dyestuff of the formula (IV)

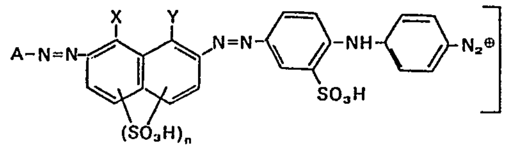 (IV)

wherein A, X, Y and n have the meanings given in Claim 1 and $W^{\ominus}$ is the anion of a mineral acid, is coupled to a compound of the formula (II)

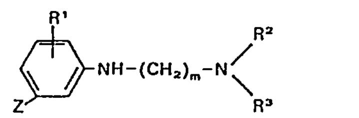 (II)

wherein Z, $R^1$, $R^2$, $R^3$ and m have the meaning given in Claim 1, in a manner which is known per se.

9. Process according to Claim 8, characterised in that a diazonium-monoazo dyestuff of the formula (VI)

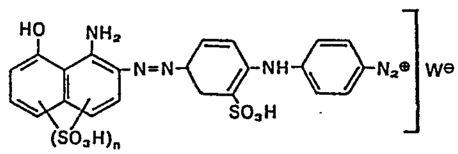 (VI)

is coupled, in a weakly alkaline range, with a diazonium compound of the formula $A-N_2^{\oplus}$ which has been obtained in a known manner by diazotisation of an amine of the formula $A-NH_2$, A having the meaning given in Claim 1, and the resulting diazonium-disazo dyestuff

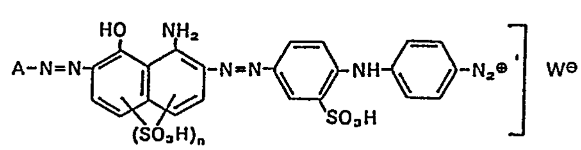

wherein A and $W^{\ominus}$ have the meaning given in Claim 8, is coupled with a coupling component of the formula (II)

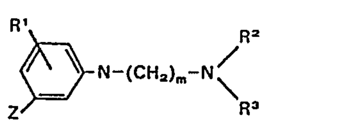 (II)

10. Use of the water-soluble polyazo dyestuffs of Claim 1 for dyeing leather.